Europäisches Patentamt

European Patent Office

Office européen des brevets

(19)

(11) Veröffentlichungsnummer: **0 607 473 B1**

# (12) EUROPÄISCHE PATENTSCHRIFT

(45) Veröffentlichungstag der Patentschrift: **18.10.95**

(51) Int. Cl.⁶: **F16K  41/02**, F16J 15/16

(21) Anmeldenummer: **93100388.3**

(22) Anmeldetag: **13.01.93**

(54) **Stopfbuchsdichtung.**

(43) Veröffentlichungstag der Anmeldung:
**27.07.94 Patentblatt  94/30**

(45) Bekanntmachung des Hinweises auf die
Patenterteilung:
**18.10.95 Patentblatt  95/42**

(84) Benannte Vertragsstaaten:
**AT ES FR IT SE**

(56) Entgegenhaltungen:
**DE-A- 3 745 040**
**DE-C- 903 878**

(73) Patentinhaber: **Klinger AG**
**Bundesstrasse 3**
**CH-6304 Zug (CH)**

(72) Erfinder: **Huber, Richard**
**Fürstenstrasse 17b**
**A-2340 Mödling (AT)**
Erfinder: **Wirz, Peter**
**Neudorf 832**
**CH-5726 Unterkulm (CH)**

(74) Vertreter: **Sparing Röhl Henseler Patentan-**
**wälte**
**Postfach 14 04 43**
**D-40074 Düsseldorf (DE)**

EP 0 607 473 B1

## Beschreibung

Die Erfindung betrifft eine Stopfbuchsdichtung zum Abdichten zwischen einer Gehäusebohrung und einer in dieser angeordneten, um einen Schwenkwinkel hin- und herschwenkbaren Welle, wobei wenigstens ein Blähgraphit enthaltender Packungsring vorgesehen ist, der mit seinem Außen- bzw. Innenmantel dichtend an der Gehäusebohrung bzw. der Welle anliegt, wobei mit der Gehäusebohrung und/oder der Welle zusammenwirkende, scheibenförmige Abstreifer aus einem geeigneten Kunststoff oder Metall vorgesehen sind.

Solche Dichtungen finden vielfach Anwendung, insbesondere bei Armaturen an drehbaren und gegebenenfalls zusätzlich axial bewegten Betätigungsspindeln. Da Blähgraphit bei relativ geringer Festigkeit ein großes Adhäsionsvermögen aufweist, besteht die Gefahr, daß Graphitteilchen an der Gegenfläche, z.B. Betätigungsspindel haften bleiben und bei weiterer Drehbewegung den gleitend zusammenwirkenden Mantel des Packungsrings beschädigen; dies gilt auch für andere Weichstoffe großer Adhäsion und geringer Festigkeit. Bei normalen Anwendungen ergeben sich zumeist keine Probleme, wohl aber dort, wo besondere Dichtheiten gefordert sind. Insbesondere beim Umweltschutz muß der Austritt von giftigen Medien in die Atmosphäre sicher unterbunden werden. Dabei sind Faltenbälge nicht in allen Fällen anwendbar, abgesehen davon, daß bei Brüchen dann plötzlich große Undichtheiten auftreten können.

Eine eingangs genannte Stopfbuchsdichtung ist aus der DE-A-3 839 792 bekannt, und besteht aus Folienringscheiben aus expandiertem Graphit und solchen aus Metall, die abwechselnd aufeinander gestapelt zu einem Dichtungsring verpreßt sind. Zwischen diese Folienringscheiben können zusätzlich Folienringscheiben aus Metall- oder Kunststoffgewebe zwischengeschaltet sein, die mit einem Schmiermittel gefüllt sind. Obwohl diese zwischengeschalteten Folienringscheiben primär zwecks Schmierung vorgesehen sind, bewirken sie gleichzeitig auch ein Abstreifen von aufgrund der geringen Festigkeit von Blähgraphit losgelösten Graphitteilchen, jedoch ist diese Abstreifwirkung schon deshalb ungenügend, weil keine durchgehenden Abstreifkanten vorgesehen sind, abgesehen davon, daß es sich nur um zwischengeschaltete und damit nur beschränkt wirkende Folienringscheiben handelt. Es findet kein Abstreifen praktisch auf dem gesamten, von den Blähgraphitlamellen eingenommenen Bereich statt. Daher besteht bei dieser Anordnung die Gefahr, daß Graphitteilchen an der Gegenfläche, beispielsweise der Betätigungsspindel, haften bleiben und bei weiterer Drehbewegung den gleitend damit zusammenwirkenden Mantel des Packungsrings beschädigen, so daß die Dichtheit im Laufe der Zeit beeinträchtigt wird.

Aus der US-A-3 039 780 ist ferner neben einer großen Anzahl weiterer Ausführungsformen eine Wellendichtung bekannt, bei der zwei schräg zur Wellenachse angeordnete Gummi-Dichtringe, jeweils stirnseitig von zwei porösen, nachgiebigen Filzscheiben abgedeckt und gekammert, mit einer dazwischen befindlichen Ölaufnahmekammer vorgesehen sind und die die Aufgabe hat, eine möglichst gute Schmierung zu bewirken, wobei die Filzscheiben zur Abstützung der Dichtringe dienen, damit eine möglichst gute Kräfteverteilung erzielt wird.

Aufgabe der Erfindung ist es, eine Stopfbuchsdichtung der eingangs genannten Art derart weiterzubieden, daß eine hohe Dichtheit über eine lange Lebensdauer sicher gewährleistet ist.

Diese Aufgabe wird dadurch gelöst,

daß der Packungsring zur Radialebene der Welle um einen Neigungswinkel geneigt ist,

daß der Packungsring beidseitig mit einem Abstreifer mit umlaufender Abstreifkante abgedeckt ist,

daß der Packungsring mit den Abstreifern - und gegebenenfalls weiteren, durch Abstreifer getrennten, ein Paket bildenden Packungsringen - zwischen zwei Stützringen angeordnet ist, die an den einander zugewandten Stirnseiten entsprechend dem Neigungswinkel geneigte Schrägflächen aufweisen und deren einander abgewandte Stirnseiten in Radialebenen verlaufen, und

daß die Dicke des Packungsrings derart ist, daß die von dem Packungsring zu überstreichende Fläche zumindest nahezu vollständig abstreifend beaufschlagt wird.

Auf diese Weise ist gewährleistet, daß gegebenenfalls an der Gegenfläche haftende Graphitteilchen durch die Abstreifer losgelöst werden, worauf sie sich wieder an der Mantelfläche der Packungsringe absetzen. Dabei reicht eine Abstreifung während einer vollen Drehung bzw. Doppelschwenkung, d.h. einer Hin- und Herschwenkung aus, um hohe Dichtheiten lange aufrechtzuerhalten.

Die Abstreifer können aus gleitfähigem Metall, z.B. Silber, oder aus einem gleitfähigen Kunststoff, wie z.B. FEP und insbesondere PTFE, bestehen und die Stirnflächen des oder der Packungsringe völlig abdecken, wobei die Kanten der ringscheibenförmigen Abstreifer die Abstreifung bewirken.

Die Erfindung wird nachstehend anhand des in den beigefügten Abbildungen dargestellten Ausführungsbeispiels näher erläutert.

Fig. 1 zeigt eine Stopfbuchsdichtung im Schnitt.

2

Fig. 2 zeigt die bei der Stopfbuchsdichtung von Fig. 1 auftretenden Berührungsverhältnisse an der schwenkbaren Welle.

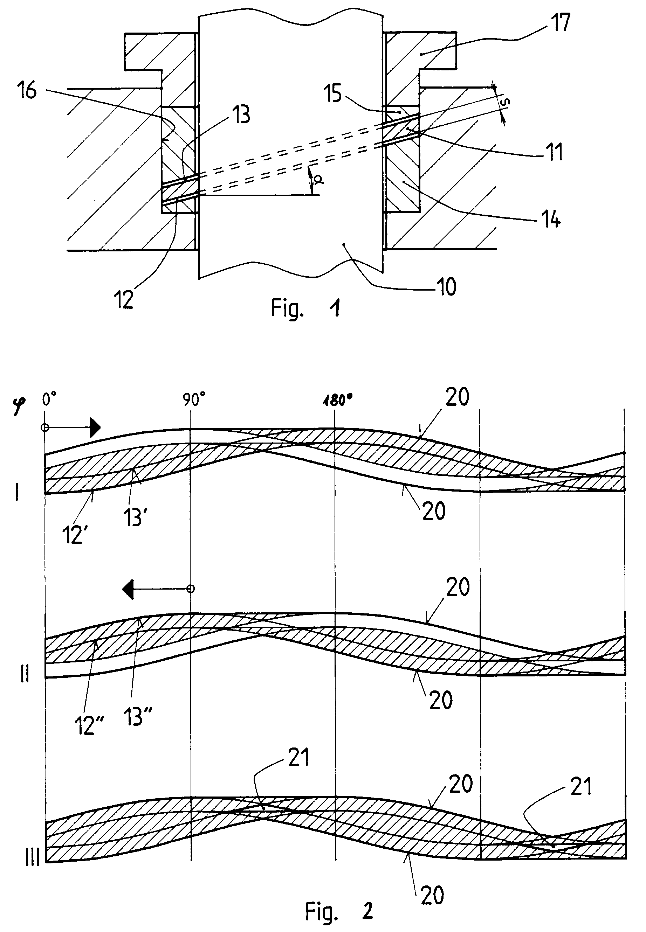

Die in Fig. 1 dargestellte Stopfbuchsdichtung weist einen gegen die Radialebene einer abzudichtenden, schwenkbaren Welle 10 um den Neigungswinkel $\alpha$ geneigten Packungsring 11 auf. An den Stirnflächen dieses aus Blähgraphit bestehenden Packungsringes 11 (beispielsweise durch Pressen bis zu einer Dichte von 1,8 g/cm$^3$ in einer Preßform hergestellt) sind als Abstreifer Ringscheiben 12, 13 beispielsweise aus PTFE vorgesehen, die gemeinsam zylindrisch ausgebildete, koaxial zur Welle 10 verlaufende Außen- und Innenmäntel bilden, die an einer Gehäusebohrung 16 bzw. der Welle 10 dichtend anliegen. Der Packungsring 11 samt Ringscheiben 12, 13 ist zwischen zwei, analog geneigte Schrägflächen aufweisenden Stützringen 14, 15 in der Gehäusebohrung 16 gelagert und über eine Stopfbuchsbrille 17 nachspannbar.

Die Berührungsverhältnisse zwischen der Welle 10 und dem Packungsring 11 sind Fig. 2 entnehmbar. Die beiden Ringscheiben 12, 13 berühren mit ihrem Innenmantel die Oberfläche der Welle 10 in der Abwicklung in Form von Sinuslinien 12', 13', wobei der zwischen den beiden Sinuslinien bzw. verlaufende Streifen die vom Packungsring 11 berührte Fläche darstellt. Nach einer Verschwenkung der Welle 10 im Uhrzeigersinn um 90° bildet sich die Berührungsfläche des Packungsrings 11 auf der abgewickelten Wellenoberfläche zwischen den Linien 12'', 13'' ab. Die sich so ergebende Außenbegrenzung der bei der Schwenkung vom Packungsring 11 überstrichenen Berührungsfläche ist in Fig. 2 als dicke Linie 20 dargestellt. Die Ringscheiben 12, 13 aus PTFE wirken mit Abschnitten ihrer Innenmäntel als Abstreifer, weil der in Bewegungsrichtung der Wellenoberfläche jeweils hintere Mantelflächenabschnitt der Ringscheiben 12, 13 die auf der Wellenoberfläche haftenden Teilchen abstreift (die sich dann wieder im Innenmantel einnisten). Die bei der Verschwenkung der Welle 10 im Uhrzeigersinn sich in der Abwicklung darstellenden Verhältnisse sind unter I dargestellt, wobei die schraffierten Flächen die von den Mantelflächenabschnitten abstreifend beaufschlagten Flächen darstellen. Unter II sind dann die Verhältnisse bei der Rückschwenkung um 90° dargestellt und unter III sind als Summe von I und II die während der Doppelschwenkung vom Packungsring 11 überstrichenen und mindestens einmal abstreifend beaufschlagten Flächen schraffiert dargestellt. Bei der dargestellten Neigung und Dicke s des Packungsrings 11 ergeben sich kleine Restflächen 21, die nicht abstreifend beaufschlagt werden. Wollte man diese vermeiden, so müßte die Dicke s des Packungsrings 11 kleiner oder gleich r(1-cos$\phi$/2)•tg$\alpha$ sein, wobei r der Wellenradius und $\phi$ der Schwenkwinkel ist. Es hat sich aber herausgestellt, daß dies nicht unbedingt der Fall sein muß, und schon eine etwa doppelt so große Dicke des Packungsrings 11 ausreichende Abdicht- und Abstreifverhältnisse ergibt.

Eine weitere Verbesserung des Abdichtverhältnisses ergibt sich dann, wenn ein Paket aus zwei oder mehreren der in Fig. 1 dargestellten Packungsringe 11 vorgesehen wird.

Bei Verwendung von zwei übereinander angeordneten Packungsringen 11, die - durch eine Ringscheibe getrennt und an den freien Stirnflächen durch Ringscheiben 12, 13 abgedeckt - bei einer Dicke s eines Packungsringes 11 von 3,5 mm, $\alpha$ = 15°, einem Außendurchmesser von 70 mm, einem Innendurchmesser von 50 mm und sonst Fig. 2 entsprechenden Verhältnissen im Vergleichsversuch (Helium-Lecktest, kalt) bei einer Druckdifferenz von 40 bar an der Niederdruckseite getestet wurden, haben sich folgende Undichtheiten ergeben:

| Betätigungen | normaler, radial angeordneter Packungsring mit PTFE-Ringscheiben abgedeckt | erfindungsgemäßer Packungsring |
|---|---|---|
| 0 | $5.10^{-7}$ mbar.l.sec$^{-1}$ | $1.10^{-7}$ mbar.l.sec$^{-1}$ |
| 10 000 | $5.10^{-1}$ mbar.l.sec$^{-1}$ | $1.10^{-5}$ mbar.l.sec$^{-1}$ |

Bei der normalen Dichtung sind also die Undichtheiten bedeutend angestiegen, und zwar soweit, daß giftige Gase sicher nicht mehr genügend abgedichtet wären. Außerdem fiel das Betätigungsmoment im drucklosen Zustand bei der normalen Dichtung von 100 Nm auf 15 Nm, bedingt durch den auftretenden Abrieb, der sich auch durch eine Vertiefung des Innenmantels anzeigte. Bei der erfindungsgemäßen Dichtung verminderte sich das Drehmoment nur von 85 Nm auf 45 Nm, was auf die Schmierwirkung des PTFE zurückzuführen ist. Dabei ist zu erwähnen, daß sich nach der vorstehenden Formel für eine vollständige Abstreifung ohne Restflächen 21 eine zulässige Dicke von 1,96 mm ergibt, daß also der Packungsring mit fast doppelter Dicke noch sehr gut abdichtet. Es zeigt sich also, daß sich auch bei Dreh- oder Schwenkbewegungen einer Welle 10 in Gehäusen od. dgl. mit Blähgraphit od. dgl. enthaltenden Packungsringen 11 sehr gute Dichtheiten erzielbar sind, wenn in der Stopfbuchsabdichtung Abstreifer 12, 13 in der hier vorgesehenen Anordnung vorgesehen sind; dies gilt auch dann, wenn der Schwenk- oder Drehbewegung eine Axialbewegung überlagert ist.

**Patentansprüche**

1. Stopfbuchsdichtung zum Abdichten zwischen einer Gehäusebohrung (16) und einer in dieser angeordneten, um einen Schwenkwinkel ($\phi$) hin- und herschwenkbaren Welle (10),

    (a) wobei wenigstens ein Blähgraphit enthaltender Packungsring (11) vorgesehen ist, der mit seinem Außen- bzw. Innenmantel dichtend an der Gehäusebohrung (16) bzw. der Welle (10) anliegt,

    (b) wobei mit der Gehäusebohrung (16) und/oder der Welle (10) zusammenwirkende, scheibenförmige Abstreifer (12, 13) aus einem geeigneten Kunststoff oder Metall vorgesehen sind,
    dadurch **gekennzeichnet,**

    (c) daß der Packungsring (11) zur Radialebene der Welle (10) um einen Neigungswinkel ($\alpha$) geneigt ist,

    (d) daß der Packungsring (11) beidseitig mit einem Abstreifer (12, 13) mit umlaufender Abstreifkante abgedeckt ist,

    (e) daß der Packungsring (11) mit den Abstreifern (12, 13) - und gegebenenfalls weiteren, durch Abstreifer (12, 13) getrennten, ein Paket bildenden Packungsringen (11) - zwischen zwei Stützringen (14, 15) angeordnet ist, die an den einander zugewandten Stirnseiten entsprechend dem Neigungswinkel ($\alpha$) geneigte Schrägflächen aufweisen und deren einander abgewandte Stirnseiten in Radialebenen der Welle (10) verlaufen und

    (f) daß die Dicke (s) des Packungsrings (11) derart ist, daß die von dem Packungsring (11) zu überstreichende Fläche zumindest nahezu vollständig abstreifend beaufschlagt wird.

2. Stopfbuchsdichtung nach Anspruch 1, dadurch gekennzeichnet, daß die Abstreifer (12, 13) aus PTFE sind.

3. Stopfbuchsdichtung nach Anspruch 1, dadurch gekennzeichnet, daß die Abstreifer (12, 13) aus Silber sind.

4. Stopfbuchsdichtung nach einem der Ansprüche 1 bis 3, dadurch gekennzeichnet, daß die Abstreifer (12, 13) die Stirnflächen des oder der Packungsringe (11) völlig abdecken.

5. Stopfbuchsdichtung nach einem der Ansprüche 1 bis 4, dadurch gekennzeichnet, daß die Dicke (s) des Packungsrings (11) derart ist, daß die von dem Packungsring (11) zu überstreichende Fläche höchstens bis auf kleine, zwischen überstrichenen Flächenbereichen liegende Restflächen (21) abstreifend beaufschlagt wird.

6. Stopfbuchsdichtung nach einem der Ansprüche 1 bis 5, dadurch gekennzeichnet, daß die Dicke s des Packungsrings (11) kleiner oder gleich etwa $2r(1-\cos\phi/2)\bullet\mathrm{tg}\alpha$, insbesondere kleiner oder gleich $r(1-\cos\phi/2)\bullet\mathrm{tg}\alpha$, ist, wobei r der Radius der Welle (10) im Abstreifbereich ist.

**Claims**

1. Stuffing-box packing for making a seal between a housing bore (16) and a shaft (10) which is arranged therein and is pivotable to and fro by a pivoting angle ($\phi$),

    (a) at least one packing ring (11) being provided which contains expanded graphite and whose outer or inner surface bears against the housing bore (16) or the shaft (10) respectively, making a seal,

    (b) disc-shaped strippers (12, 13) being provided which interact with the housing bore (16) and/or the shaft (10) and are made of a suitable plastic or metal, characterized

    (c) in that the packing ring (11) is inclined by an angle of inclination ($\alpha$) relative to the radial plane of the shaft (10),

    (d) in that the packing ring (11) is covered on both sides by a stripper (12, 13) with an all round stripping edge,

    (e) in that the packing ring (11) with the strippers (12, 13) - and, if appropriate, further packing rings (11) separated by strippers (12, 13) and forming a pack - is arranged between two support rings (14, 15) which have, on the mutually facing end faces, oblique surfaces inclined corresponding to the angle of inclination ($\alpha$) and, on the end faces facing away from one another, extend in radial planes of the shaft (10), and

(f) in that the thickness (s) of the packing ring (11) is such that the area to be swept by the packing ring (11) is at least almost completely subjected to the stripping action.

2. Stuffing-box packing according to Claim 1, characterized in that the strippers (12, 13) are made of PTFE.

3. Stuffing-box packing according to Claim 1, characterized in that the strippers (12, 13) are made of silver.

4. Stuffing-box packing according to any of Claims 1 to 3, characterized in that the strippers (12, 13) completely cover the end faces of the packing ring or rings (11).

5. Stuffing-box packing according to any of Claims 1 to 4, characterized in that the thickness (s) of the packing ring (11) is such that the area to be swept by the packing ring (11) is subjected to the stripping action but for at most small residual areas (21) located between swept area zones.

6. Stuffing-box packing according to any of Claims 1 to 5, characterized in that the thickness s of the packing ring (11) is smaller than or equal to approximately $2r(1-\cos\phi/2)\times\tan\alpha$, in particular smaller than or equal to $r(1-\cos\phi/2)\times\tan\alpha$, r being the radius of the shaft (10) in the stripping zone.

**Revendications**

1. Dispositif d'étanchéité à presse-étoupe destiné à réaliser l'étanchéité entre un alésage (16) d'un boîtier et un arbre (10) agencé dans cet alésage et animé d'un mouvement rotatif en va-et-vient d'un angle de rotation ( $\phi$ ), dans lequel :

   a) est prévu au moins une bague d'étoupage (11) comportant du graphite expansible, dont la périphérie extérieure s'applique de manière étanche dans l'alésage (16) du boîtier et dont la périphérie intérieure s'applique de manière étanche sur l'arbre (10) :

   b) sont prévus des racleurs (12, 13) en forme de disque coopérant avec l'alésage (16) du boîtier et/ou l'arbre (10) et réalisés en une matière plastique ou en un métal appropriés, caractérisé en ce que :

   c) la bague d'étoupage (11) est inclinée d'un angle ($\alpha$) par rapport à un plan radial de l'arbre (10) ;

   d) la bague d'étoupage (11) est recouverte sur ses deux faces par les racleurs (12, 13) présentant des arêtes de raclage périphériques ;

   e) la bague d'étoupage (11), avec les racleurs (12, 13), (éventuellement plusieurs bagues d'étoupage (11) séparées par des racleurs (12, 13) en sorte de former un empilement) est disposée entre deux bagues d'appui (14, 15) dont les faces qui sont en regard de celles de la bague d'étoupage sont inclinées de manière correspondante de l'angle ($\alpha$) et dont les faces opposées s'étendent dans un plan radial de l'arbre (10), et

   f) l'épaisseur (s) de la bague d'étoupage (11) est telle que la surface à balayer par la bague d'étoupage (11) est pour le moins presque entièrement raclée.

2. Dispositif d'étanchéité à presse-étoupe selon la revendication 1, caractérisé en ce que les racleurs (12, 13) sont en PTFE.

3. Dispositif d'étanchéité à presse-étoupe selon la revendication 1, caractérisé en ce que les racleurs (12, 13) sont en argent.

4. Dispositif d'étanchéité à presse-étoupe selon l'une des revendications 1 à 3, caractérisé en ce que les racleurs (12, 13) recouvrent totalement les faces extérieures de la ou des bagues d'étoupage (11).

5. Dispositif d'étanchéité à presse-étoupe selon l'une des revendications 1 à 4, caractérisé en ce que l'épaisseur (s) de la bague d'étoupage (11) est telle que la surface à balayer par la bague d'étoupage (11) est raclée au maximum jusqu'à des petites surfaces résiduelles (21) situées entre deux zones de surface balayées.

6. Dispositif d'étanchéité à presse-étoupe selon l'une des revendications 1 à 5, caractérisé en ce que l'épaisseur (s) de la bague d'étoupage (11) est inférieure ou égale à environ $2r.(1 - \cos\phi/2).tg\,\alpha$ , en

particulier inférieure ou égale à r.(1 - cos $\phi$ /2).tg $\alpha$ , où r est le rayon de l'arbre (10) dans la zone de raclage.

Fig. 1

Fig. 2